Europäisches Patentamt

European Patent Office

Office européen des brevets

(11) Veröffentlichungsnummer: **0 522 542 B1**

# EUROPÄISCHE PATENTSCHRIFT

(45) Veröffentlichungstag der Patentschrift: 27.09.95

(51) Int. Cl.$^6$: **B21B** 5/00, B23D 65/00

(21) Anmeldenummer: **92111614.1**

(22) Anmeldetag: **09.07.92**

(54) **Verfahren zur Herstellung von nahtlosen Drahtschlaufen.**

(30) Priorität: **12.07.91 DE 4123095**

(43) Veröffentlichungstag der Anmeldung:
**13.01.93 Patentblatt 93/02**

(45) Bekanntmachung des Hinweises auf die
Patenterteilung:
**27.09.95 Patentblatt 95/39**

(84) Benannte Vertragsstaaten:
**CH DE FR GB IT LI**

(56) Entgegenhaltungen:
WO-A-85/00765     WO-A-87/02286
DE-C- 201 166      DE-C- 372 377
GB-A- 2 055 643    US-A- 2 029 751

(73) Patentinhaber: **Wacker-Siltronic Gesellschaft
für Halbleitermaterialien mbH
Johannes-Hess-Strasse 24
D-84489 Burghausen (DE)**

(72) Erfinder: **Seifert, Dieter, Dr.
Siedlungsstrasse 12
W-8265 Neuötting, FRG (DE)**

(74) Vertreter: **Rimböck, Karl-Heinz, Dr. et al
c/o Wacker-Chemie GmbH
Zentralabteilung PML
Hans-Seidel-Platz 4
D-81737 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Schneidwerkzeuges für Drahtsägen mit Drahtschlaufen, die über ihren gesamten Umfang eine gleichbleibende Festigkeit und eine hohe Formpräzision aufweisen.

Die Anforderungen, die an ein Schneidwerkzeug gestellt werden, sind beispielsweise in der Halbleitertechnik besonders hoch. In diesem Bereich werden sprödharte Werkstücke, beispielsweise Stäbe oder Blöcke aus Halbleitermaterialien wie Silicium oder aus Verbindungshalbleitermaterialien wie Galliumarsenid in dünne Scheiben gesägt. Die Scheiben (Wafer) mit Dicken von 0.1 mm bis 1 mm dienen als Ausgangsprodukt zur Erzeugung verschiedenster elektronischer Bauelemente oder auch zur Herstellung von Solarzellen.

Ein geringer Schnittverlust, eine hohe geometrische Qualität der abgesägten Scheiben verbunden mit hohen Sägeraten sind die wichtigsten zu erfüllenden Vorgaben für einen wirtschaftlichen Sägeprozeß.

Innenloch-, Draht- und Bandsägen sind die am häufigsten eingesetzten Sägemaschinen, wenn es gilt sprödharte Werkstücke mit hoher Präzision zu zerteilen. Bisher werden besonders Innenlochsägen herangezogen, um Stäbe aus Siliciumeinkristallen in Wafer zu zersägen. Dem ungebrochenen Trend zu Einkristallen mit immer größeren Durchmessern - mittlerweile beherrscht die Technik das Ziehen von Kristallen mit Durchmessern von 300 mm in der erforderlichen Qualität - können die Sägeblätter der Innenlochsägen jedoch nicht mehr ohne Nachteile folgen. Größere Sägeblätter sind nur noch über eine Dickenverstärkung so zu stabilisieren, daß Scheiben mit der erforderlichen geometrischen Qualität erhalten werden. Mit den unvermeidbar breiteren Schneidkanten müssen höhere Schnittverluste in Kauf genommen werden. Besonders, wenn es sich bei dem verlorengehenden Material um aufwendig hergestelltes, hochwertiges Halbleitermaterial handelt, wird die Wirtschaftlichkeit der Scheibenherstellung empfindlich beeinträchtigt. Ein weiterer Nachteil erwächst dem Sägeprozeß aus dem mit dem Werkstückdurchmesser steigenden Aufwand für die Gestaltung der Maschine und des Schneidwerkzeuges.

Draht- und Bandsägen mit fixiertem Schleifkorn bilden eine Alternative zu Innenlochsägen, besonders für Werkstücke mit großen Durchmessern. Für kleinere Werkstücke können auch Drahtsägen mit losem Läppkorn eingesetzt werden, bei denen der Draht mehrfach über Umlenkrollen gewendelt wird, so daß gleichzeitig eine große Zahl von Wafern hergestellt werden kann. Mit wachsender Schnittspaltlänge ergeben sich allerdings zunehmend Probleme, die den Läppkorntransport an die Schnittstelle betreffen. Die erreichbare Schnittgenauigkeit ist dadurch ebenfalls begrenzt. Bandsägeblätter zum Sägen von hartsprödem Material sind in der Regel entlang einer Kante mit Schneidplättchen oder durchgehend mit einem Schneidbelag versehen, aus dem die fixierten Schneidkörner aus Diamant oder Bornitrid herausragen. Die Bänder sind an ihren Enden zu Bandschlaufen verschweißt. Derartige Bandschlaufen werden über umlenkrollen im Kreis geführt. Quer zur Bewegungsrichtung des Bandes erfolgt die zustellung des Werkstückes gegen die Schneidkante.

Die Umlaufgeschwindigkeiten von Draht- oder Bandschlaufen mit fixierten Schneidkörnern erreichen, werkstoffabhängig, beträchtliche Werte. Beim Sägen hartspröden Kalbleitermaterials, wie beispielsweise Silicium, liegen diese vorzugsweise zwischen 20 m/s und 120 m/s. Da den Schneidwerkzeugen extreme Schnittlinientreue abverlangt wird, müssen die Schlaufen mit einer hohen Zugkraft gespannt werden, damit die seitliche Auslenkung des Sägeblattes infolge des Einflusses der Sägekräfte in einem Toleranzbereich von wenigen $\mu$m bleibt. Darüber hinaus ist wegen des ständigen Richtungswechsels beim Umlauf eine hohe Biegewechselfestigkeit des Schlaufenmaterials nötig. Besonders geeignete Materialien für Sägebänder und -drähte sind wegen ihrer hohen Zugfestigkeit und Elastizitätsgrenzen Stähle und Sonderlegierungen. Allerdings ist es bislang nicht möglich, die günstigen Materialeigenschaften optimal zu nutzen. Die Schwachstellen von Draht- und Bandschlaufen bilden die Nähte, an denen die Draht- oder Banenden zu Schlaufen verschweißt oder verlötet wurden. Der geringeren Festigkeit der Nahtstelle muß durch eine Anpassung der Bandspannung Rechnung getragen werden. Wenn, wie im Falle der Bearbeitung von Silicium, nur bei hoher Zugbelastung der Schneidwerkzeuge mit der geforderten Qualität getrennt werden kann, sind die Bandquerschnitte und Drahtdurchmesser entsprechend zu vergrößern. Darüber hinaus entstehen Nahtspannungen, die zusätzlich die Ebenheit und den Rundlauf der Bandschlaufe verschlechtern und die Präzision der Schnitte beeinträchtigen.

Aus der GB-A 2,055,643 ist bekannt, daß aus einer flachen, dünnen Scheibe durch Strecken der inneren Bereiche ein nahtloses Band hergestellt werden kann. Dieses Verfahren ist jedoch durch die Größe des verfügbaren Scheibenmaterials nur begrenzt verwendbar und führt zu Bändern mit sehr uneinheitlichem Verformungsgrad und unterschiedlicher Spannungs- und Festigkeitsverteilung.

Die Patentanmeldung WO-A-87/02286 betrifft ein endloses Sägeband und dessen Herstellung.

Die Aufgabe der Erfindung bestand darin, ein Verfahren zur Herstellung eines Schneidwerkzeuges für Drahtsägen mit hochbelastbaren Drahtschlaufen, die über ihren gesamten Umfang eine möglichst gleichbleibende Festigkeit aufweisen, anzugeben.

Die Lösung der Aufgabe erfolgt durch das Verfahren gemäß Anspruch 1.

Durch Walzprozesse können beispielsweise stählerne Werkstoffe in Streifen- oder Plattenform zu sehr dünnen, maßgenauen Bändern oder Folien geformt werden. Die Walzarbeit wird in der Regel auf mehrere Walzgerüste, die der Werkstoff nacheinander durchläuft, aufgeteilt. Besonders beim Kaltwalzen, das heißt bei der Werkstoffbearbeitung durch Walzen ohne Wärmezufuhr, tritt neben der Verformung eine besondere Verfestigung des Materials auf. Dieser Effekt wird in der Technik unter anderem zur Herstellung hochbelastbarer Federstahlbänder genutzt. Stahlbänder, die nach diesem Verfahren hergestellt werden, besitzen Zugfestigkeiten bis zu 2200 N/mm². Sonderlegierungen können noch höhere Werte erreichen.

Durch das erfindungsgemäße Verfahren werden Schneidwerkzeuge für Drahtsägen mit nahtlosen Drahtschlaufen zugänglich, die diese günstigen Materialeigenschaften aufweisen. Aus einem ringförmigen, nahtlosen Metallrohling wird zunächst ein walzbarer Ausgangsring gefertigt und dieser anschließend in einer Walzvorrichtung zu einer dünnen Bandschlaufe kalt ausgewalzt. In den folgenden Nachbehandlungsschritten wird die Bandschlaufe in Drahtschlaufen geteilt. Diese werden dann mit einem Schneidbelag versehen.

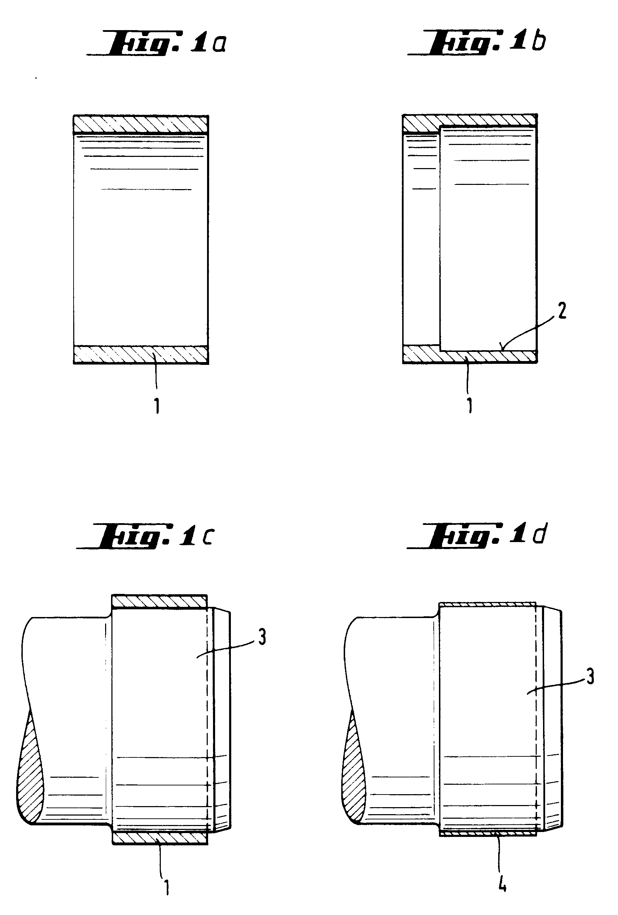

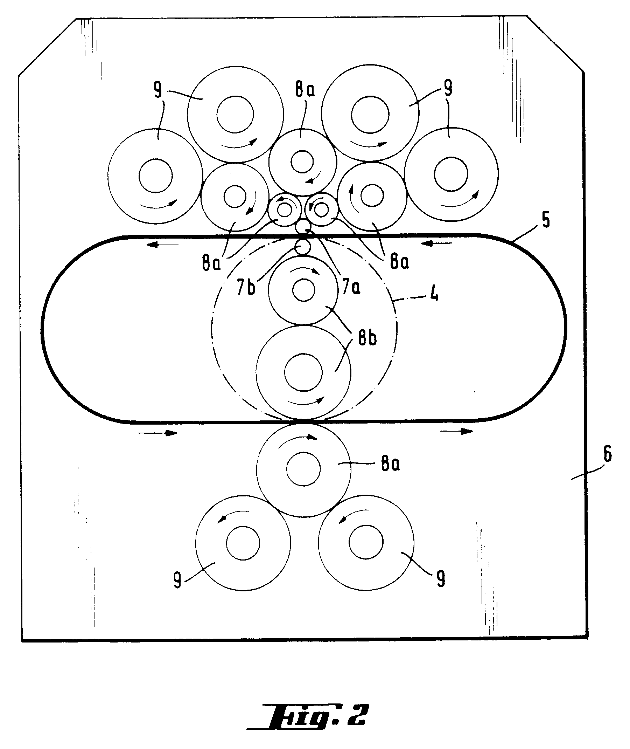

Im folgenden wird das erfindungsgemäße Herstellungsverfahren anhand von Figuren näher erläutert. In Fig. 1 a)-d) ist schematisch der Fortgang der Behandlung eines Rohlings zum walzbaren Ausgangsring dargestellt. Figur 2 zeigt in einer Schemazeichnung eine mögliche Ausführungsform für ein Kaltwalzwerk, in dem der Metallring zur nahtlosen Bandschlaufe aufgeweitet wird.

Die Rohlinge werden aus Grundkörpern durch spanabhebende oder spanlose Maßnahmen hergestellt. Insbesondere eignen sich von nahtlosen Metallrohren abgetrennte, aus Metallplatten herausgetrennte oder aus durchbohrten zylinderförmigen Grundkörpern erzeugte Ringe. Selbstverständlich kann man die Rohlinge auch gießen. Unter Umständen ist es zweckmäßig, den Ringinnendurchmesser zunächst im Warmwalzverfahren oder durch Schmieden aufzuweiten. Die Werkstoffwahl ist unabhängig von der Schweißbarkeit und grundsätzlich auf alle walzbaren Materialien ausdehnbar. Als besonders vorteilhaft erweisen sich jedoch Stähle, die auch zur Herstellung von Federn eingesetzt werden und weitere Werkstoffe, die nach dem Walzen eine hohe Festigkeit erreichen.

Mit der Vorbehandlung des Rohlings zum Ausgangsring wird die Geometrie der zu erzeugenden Bandschlaufe weitgehend vorherbestimmt. Beim Walzvorgang wird vor allem der Ringumfang des Ausgangsringes erhöht und die Manteldicke entsprechend verringert. Die Manteldicke $h_o$ des Ausgangsringes richtet sich deshalb annähernd nach der angestrebten Dicke $h_1$ des ausgewalzten Bandes. Sie läßt sich in erster Näherung nach der Formel

$$h_o = h_1 * U_1 / (D_o * \pi)$$

bestimmen, wobei $U_1$ der gewünschte Umfang der Schlaufe und $D_o$ der mittlere Ringdurchmesser des Ausgangsringes sind. Soll beispielsweise ein Band mit einer Dicke von 0,05 mm und einem Umfang von 3000 mm aus einem Ring mit 100 mm mittleren Durchmesser gewalzt werden, muß der Rohling zu einem Ausgangsring mit einer Manteldicke von ca. 0,48 mm umgearbeitet werden. Gemäß der Darstellung in Fig. 1 a) und Fig. 1 b) wird zunächst, beispielsweise durch Schleifen, der Innendurchmesser des ringförmigen Rohlings (1) zu einem zylindrischen Sitz (2) auf einer Breite größer der angestrebten Bandschlaufenbreite erweitert. Im folgenden Bearbeitungsschritt wird dieser Ringteil vom Rest abgetrennt und, wie in Fig. 1 c) gezeigt, auf einen paßgenauen Dorn (3) aufgezogen. Selbstverständlich ist es ebenfalls möglich, den Dorn erst einzusetzen und danach das Reststück zu entfernen. Im abschließenden Bearbeitungsschritt wird von der äußeren Mantelfläche beispielsweise durch Drehen und Schleifen soviel Material abgetragen, daß der walzbare Ausgangsring (4) mit der berechneten Wandstärke resultiert. Dieses Stadium ist in Fig. 1 d) angedeutet. Der Durchmesser des Ausgangsringes ist in weiten Grenzen frei wählbar. Die Ringbreite hängt wesentlich davon ab, in wieviele Drahtschlaufen die Bandschlaufe geteilt werden soll. Allerdings muß sichergestellt sein, daß sehr breite Ringe noch präzise gewalzt werden können. Mit besonderem Vorteil werden Ausgangsringe mit Breiten von 5 mm bis 400 mm weiterverarbeitet. Wie oben gezeigt, orientieren sich die übrigen Maße für den Ausgangsring entscheidend am Umfang und der Banddicke der zu erzeugenden Bandschlaufe. Vorzugsweise kommen im Hinblick auf die spätere Verwendung Ausgangsringe mit Durchmessern von 50 mm bis 500 mm in Frage, die auf einen Bandschleifenumfang von vorzugsweise 1 m bis 6 m ausgewalzt werden. Die Dicken der ausgewalzten Schlaufen betragen bevorzugt 0,01 mm bis 1,5 mm.

Die Erweiterung des Ausgangsringes zur Bandschlaufe erfolgt in einer Kaltwalzvorrichtung. Das Auswalzen kann allerdings von Wärmebehandlungsschritten unterbrochen werden, um einer zu großen Versprödung entgegenzuwirken.

Kaltbandwalzwerke sind für die Herstellung von dünnen Metallfolien oder Metallstreifen bekannt und beispielsweise in "DAS FACHWISSEN DES INGENIEURS", Band I/2, VEB Fachbuchverlag Leipzig, 204-206 (1965) beschrieben worden. Die Walzvorrichtung (gemäß Fig. 2) ist speziell zur Herstellung von Bandschlaufen geeignet. Figur 2 zeigt den Ausgangsring 4 und die sich weitende Bandschlaufe 5 in der Walzvorrichtung. Die Walzenanordnung im Maschinengestell 6 ist in der in der Walztechnik üblichen Form dargestellt. Der Walzvorgang und die damit einhergehende Kaltverfestigung des Werkstückes erfolgt zwischen zwei sich gegenüberliegenden dünnen Arbeitswalzen 7a, 7b im allgemeinem aus glattem, gehärtetem Stahl. Sie bilden einen Spalt aus, durch den die Metallschlaufe durchgezogen oder infolge einer Rotationsbewegung der Walzen durchgedrückt wird. An den Arbeitswalzen 7a, 7b liegen Hilfswalzen 8a, 8b mit größerem Durchmesser an. Sie sind teilweise angetrieben und übertragen die Bewegung auf die angrenzenden Walzen. Um die Bandschlaufe mit hoher Präzision walzen zu können, wird die im Inneren der Bandschlaufe befindliche Arbeitswalze 7b mit Hilfe von Hilfswalzen 8b durch die Bandschlaufe hindurch auf im Gestell 6 gelagerte Stützwalzen 9 abgestützt. Die äußere Arbeitswalze 7a ist vorzugsweise von insgesamt fünf Hilfswalzen 8a umgeben. Davon liegen zwei berührend an der Arbeitswalze an, die übrigen drei bilden eine weitere Lage umgebender Walzen. Die Zustellung der Arbeitswalzen, also das Verringern der Spaltbreite ist bevorzugt durch eine Lageveränderung der äußeren Stützwalzen 9 möglich. Diese mit noch größerem Durchmesser ausgeführten Walzen begrenzen darüber hinaus die Durchbiegung der dünneren Walzen bei der Übertragung der Walzkräfte auf das Werkstück. Zweckmäßigerweise werden die zur oberen Arbeitswalze gehörenden Stützwalzen für die Zustellung benutzt. Speziell zur Bearbeitung der Bandschlaufe sind die stützwalzen der unteren Arbeitswalze in der dargestellten Form eines um 180° gedrehten Y angeordnet. Die Verwendung von mehreren Lagen abstützender Walzen ermöglicht es, Arbeitswalzen mit geringen Durchmessern, beispielsweise von 4 mm, einzusetzen, so daß auch hochfeste Werkstoffe gewalzt werden können.

Selbstverständlich sind auch andere Walzenanordnungen möglich. Besonders vorteilhaft ist es jedoch, wenn die Walzkräfte über den zurücklaufenden Teil der Bandschlaufe hindurch nach außen auf das steife Maschinengestell 6 abgestützt werden, so wie es in Figur 2 beispielhaft gezeigt ist. Damit ist eine besonders hohe Genauigkeit beim Walzen der Bandschlaufe zu erzielen.

Der Übersichtlichkeit wegen sind in Figur 2 Bandführungsrollen, die sich dem aufweitenden Umfang des Werkstückes anpassen, nicht dargestellt. Dennoch sind solche Rollen, insbesondere bei der Herstellung von Bandschlaufen, mit großem Umfang zweckmäßig. Ebenso fehlen in der Darstellung übliche Lager und Stützeinrichtungen zur Sicherung der Lagestabilität der Rollenanordnung sowie aus der Walztechnik bekannte Einrichtungen zur Schmierung des Bandes.

Die ausgewalzte Bandschlaufe wird gegebenenfalls einigen in der Technik bekannten Nachbehandlungsmaßnahmen unterzogen. Insbesondere kann sie gehärtet, angelassen und gerichtet werden.

Im nächsten Verfahrensschritt zur Herstellung des Schneidwerkzeuges wird die ausgewalzte Bandschlaufe auf eine über ihren gesamten Umfang gleiche Breite gebracht und geteilt. Dazu wird sie bevorzugt auf einen Rollensatz, vorteilhaft gebildet aus 2 bis 3 Rollen, aufgezogen, gespannt und an den Kanten geschliffen. Die Bandschlaufe wird dann, beispielsweise durch Trennschleifen, zu Drähten geteilt. Zweckmäßigerweise umläuft die Bandschlaufe den Rollensatz, während die rotierende Sägekante des Trennwerkzeuges dagegengeführt wird. Als Trennwerkzeuge eignen sich besonders Mehrblattsägen mit engen sägeblattabständen. Aus einer nahtlosen Bandschlaufe wird eine große Zahl hochfester Drahtschlaufen erzeugt. Die dabei erforderlichen Trennschritte werden so ausgeführt, daß eine Harfe aus Drähten mit dem für den Schneidprozeß erforderlichen Abständen entsteht. Zu diesem Zweck sind die Rollen des Rollensatzes mit Führungsrillen zur Aufnahme der Drähte versehen. Beim Zerteilen der Bandschlaufe gleiten die gespannten Drähte dann selbständig in diese Führungsrillen.

Auf dem äußeren Drahtumfang der Drahtschlaufen wird ein Schneidbelag aufgebracht. Der Schneidbelag wird vorzugsweise elektrochemisch abgeschieden, wobei die zu belegende Drahtseite in das Abscheidebad eintaucht. Das Belegen geschieht bei bereits auf dem Rollensatz aufgezogenen Drahtschlaufen. Durch das Abdecken der nicht zu belegenden Drahtbereiche beim Beschichten mit dem Diamantbelag wird dafür gesorgt, daß der Belag nur auf der Schnittseite der Drähte aufgebracht wird. Das fertiggestellte Schneidwerkzeug kann daraufhin sofort zusammen mit dem Rollensatz in die Sägemaschine eingesetzt werden, ohne daß eine Vielzahl von Drahtschlaufen einzeln auf die Rollen der Maschine gelegt werden müssen. Abgenutzte Beläge können erneuert und die Schneidwerkzeuge wiederverwendet werden. Gegebenenfalls kann auch die Herstellung der Drahtschlaufen aus der Bandschlaufe und die Belegung mit Schneidbelag bei bereits in der Sägemaschine befindlichem Rollensatz erfolgen.

Die Drahtschlaufen des nach dem erfindungsgemäßen Verfahren hergestellten Schneidewerkzeuges zeichnen sich durch eine besondere Festigkeit aus, so daß auch sprödhartes Material, wie beispielsweise Silicium, mit sehr geringem Sägespalt und entsprechend geringem Schnittverlust präzise zerteilt werden kann. Das Herstellungsverfahren vermeidet aufwendige Maßnahmen und erlaubt den einfachen Ein- und Ausbau des Schneidwerkzeuges in die Sägemaschine.

**Patentansprüche**

1. Verfahren zur Herstellung eines Schneidwerkzeuges für Drahtsägen zum Schneiden von sprödhartem Material, gekennzeichnet durch folgende Maßnahmen:
   a) Bereitstellen eines nahtlosen Metallringes (1),
   b) Umarbeiten des Metallringes (1) zu einem walzbaren Ausgangsring (4),
   c) Aufweiten des Ausgangsrings (4) durch Kaltwalzen zu einer dünnen Bandschlaufe (5),
   d) Aufziehen der Bandschlaufe (5) auf einen mit Führungsrillen versehenen Rollensatz,
   e) Teilen der Bandschlaufe in Drahtschlaufen, wobei die Drahtschlaufen in die Führungsrillen gleiten, und
   f) Aufbringen eines Schneidbelages auf dem Außenumfang der Drahtschlaufen.

2. Verfahren nach Anspruch 1, gekennzeichnet dadurch, daß der nahtlose Metallring (1) von einem nahtlosen Metallrohr abgetrennt, aus einer Metallplatte herausgetrennt oder von gebohrten, zylinderförmigen Grundkörpern erzeugt wird.

3. Verfahren nach Anspruch 1 oder Anspruch 2, gekennzeichnet dadurch, daß aus dem Metallring (1) der Ausgangsring (4) durch Drehen oder Schleifen gefertigt wird.

4. Verfahren nach einem der Ansprüche 1 bis 3, gekennzeichnet dadurch, daß ein Ausgangsring, (4) mit einem Durchmesser von 50 mm bis 500 mm gefertigt wird und durch Kaltwalzen zu einer Bandschlaufe, (5) mit einem Umfang von 1 m bis 6 m ausgewalzt wird.

5. Verfahren nach einem der Ansprüche 1 bis 4, dadurch gekennzeichnet, daß der Schneidbelag elektrochemisch abgeschieden wird.

**Claims**

1. Method for producing a cutting tool for wire saws for cutting brittle and hard material, characterized by the following measures:
   a) preparing a seamless metal ring (1),
   b) converting the metal ring (1) into a rollable starting ring (4),
   c) expanding the starting ring (4) by cold rolling to form a thin ribbon loop (5),
   d) drawing the ribbon loop (5) onto a set of rolls provided with guide grooves,
   e) dividing the ribbon loop into wire loops, during which operation the wire loops slide into the guide grooves, and
   f) applying a cutting coating to the external circumference of the wire loops.

2. Method according to Claim 1, characterized in that the seamless metal ring (1) is cut from a seamless metal tube, cut out of a metal sheet or produced from drilled cylindrical parent bodies.

3. Method according to Claim 1 or Claim 2, characterized in that the starting ring (4) is manufactured from the metal ring (1) by turning or grinding.

4. Method according to one of Claims 1 to 3, characterized in that a starting ring (4) having a diameter of 50 mm to 500 mm is manufactured and is rolled to form a ribbon loop (5) having a circumference of 1 m to 6 m by cold rolling.

5. Method according to one of Claims 1 to 4, characterized in that the cutting coating is deposited electrochemically.

**Revendications**

1. Procédé de fabrication d'un outil de coupe pour scie à fil destinée à couper une matière dure et fragile, caractérisé par les dispositions suivantes :
   a) préparation d'un anneau métallique sans soudure (1),
   b) transformation de l'anneau métallique (1) en un anneau de départ (4) susceptible de laminage
   c) agrandissement de l'anneau de départ (4) par laminage à froid pour former une boucle de bande mince (5)
   d) montage de la boucle de bande (5) sur un jeu de poulies munies de gorges de guidage
   e) division de la boucle de bande en boucles de fil, les boucles de fil glissant alors dans les gorges de guidage et,
   f) dépôt d'un revêtement de coupe sur la circonférence extérieure des boucles de fil.

2. Procédé selon la revendication 1, caractérisé en ce que l'anneau métallique sans soudure (1) est obtenu par tronçonnage à partir d'un tube métallique sans soudure, ou découpé dans une plaque métallique, ou formé à partir de corps de base cylindriques forés.

3. Procédé selon la revendication 1 ou la revendication 2, caractérisé en ce que l'anneau de départ (4) est formé à partir de l'anneau métallique (1) par tournage ou meulage.

4. Procédé selon une des revendications 1 à 3, caractérisé en ce qu'on fabrique un anneau de départ (4) d'un diamètre de 50 à 500 mm et qu'on le transforme en une boucle de bande (5) d'un périmètre de 1 m à 6 m.

5. Procédé selon une des revendications 1 à 4, caractérisé en ce que le revêtement de coupe est déposé par voie électrochimique.

## Fig. 1a

## Fig. 1b

## Fig. 1c

## Fig. 1d

Fig. 2